# FASCICULE DE BREVET EUROPEEN

(11) **EP 4 164 908 B1**
(45) Date de publication et mention de la délivrance du brevet: **28.01.2026**
(21) Numéro de dépôt: 21733790.6
(22) Date de dépôt: 16.06.2021
(51) Int. Cl.: B60K 11/04, B60K 11/08, B60L 1/00, B60L 1/02, B60L 58/26, F28D 1/02, F28D 1/04, F28F 27/00, F28F 27/02

(54) **MODULE D'ÉCHANGE DE CHALEUR COMPRENANT AU MOINS DEUX ÉCHANGEURS DE CHALEUR**
WÄRMETAUSCHERMODUL MIT MINDESTENS ZWEI WÄRMETAUSCHERN
HEAT EXCHANGER MODULE COMPRISING AT LEAST TWO HEAT EXCHANGERS

(30) Priorité: 16.06.2020 FR 2006283
(43) Date de publication de la demande: 19.04.2023
(73) Titulaire: VALEO SYSTEMES THERMIQUES, 78320 Le Mesnil Saint-Denis (FR)
(72) Inventeur: BIREAUD, Fabien, 78322 Le Mesnil-Saint-Denis Cedex (FR); TRINDADE, Jose, 78322 Le Mesnil-Saint-Denis Cedex (FR); TOURNOIS, Remi, 78322 Le Mesnil-Saint-Denis Cedex (FR); CAPARROS, Mathieu, 78322 Le Mesnil-Saint-Denis Cedex (FR)
(74) Mandataire: Valeo Powertrain Systems
(86) Numéro de dépôt international: PCT/EP2021/066263
(87) Numéro de publication internationale: WO 2021/255104

(56) Documents cités:
- WO-A1-2015/129348
- FR-A1- 3 076 605
- FR-A1- 3 076 606
- FR-A3- 2 929 884
- US-A1- 2017 174 040

## Description

La présente invention concerne un module d'échange de chaleur comprenant au moins deux échangeurs de chaleur. La présente invention a aussi pour objet un système d'échange de chaleur comportant un groupe moto-ventilateur apte à faire circuler un flux d'air à travers un tel module d'échange de chaleur. La présente invention a aussi pour objet une installation de traitement thermique d'un habitacle d'un véhicule automobile et d'un dispositif de stockage d'énergie électrique du véhicule automobile et/ou de moyens de commande d'un moteur électrique propulsant le véhicule automobile, comprenant un tel système d'échange de chaleur. La présente invention a aussi pour objet un véhicule automobile pourvu d'au moins un moteur électrique et équipé d'une telle installation de traitement thermique. La présente invention a aussi pour objet un procédé de mise en œuvre d'une telle installation de traitement thermique. Un véhicule automobile équipé d'un moteur électrique formant un moyen de propulsion du véhicule automobile est pourvu d'un dispositif de stockage d'énergie électrique pour alimenter en énergie électrique le moteur électrique lorsque le véhicule automobile se déplace, c'est-à-dire en mode roulage. A l'arrêt du véhicule automobile, il convient de recharger en énergie électrique le dispositif de stockage d'énergie électrique.

Il est connu de charger le dispositif de stockage électrique du véhicule automobile en le raccordant pendant plusieurs heures au réseau électrique domestique. Cette technique de charge permet de maintenir la température du dispositif de stockage électrique en dessous d'un certain seuil, ce qui permet de s'affranchir de tout système de refroidissement du dispositif de stockage électrique.

Une nouvelle technique de charge rapide a fait son apparition récemment. Elle consiste à charger le dispositif de stockage électrique sous une tension et un ampérage élevés, de manière à charger le dispositif de stockage électrique en un temps maximum de vingt minutes. Cette charge rapide provoque un échauffement du dispositif de stockage électrique qu'il convient de refroidir efficacement. A cet effet, un circuit de fluide réfrigérant comprenant un échangeur de chaleur est configuré pour capter des calories au dispositif de stockage électrique et céder ces calories à un flux d'air qui traverse l'échangeur de chaleur.

Le moteur électrique est équipé de moyens de commande pour contrôler sa mise en œuvre. De tels moyens de commande tendent aussi à s'échauffer lors de leur fonctionnement et il convient également de les refroidir efficacement. A cet effet, un circuit de refroidissement des moyens de commande comprenant un autre échangeur de chaleur est configuré pour capter des calories aux moyens de commande et céder ces calories au flux d'air qui traverse cet échangeur de chaleur.

Enfin, le véhicule automobile comporte un habitacle à l'intérieur duquel un utilisateur prend place et dont il est souhaitable de pouvoir modifier la température à partir d'une admission d'un air pulsé à l'intérieur de l'habitacle.

Un problème général dans le domaine réside en un meilleur compromis à trouver entre un refroidissement efficace des moyens de commande du moteur électrique qui s'échauffent notamment lorsque le véhicule automobile se déplace, donc lorsque le véhicule automobile est en mode roulage, une modification d'une température de l'air contenu à l'intérieur de l'habitacle du véhicule automobile qui est nécessaire essentiellement lorsque le véhicule est en mode roulage et un refroidissement efficace du dispositif de stockage électrique qui est impératif lorsque le véhicule automobile est à l'arrêt et que le dispositif de stockage électrique est en mode charge rapide.

Par ailleurs, il est souhaitable d'optimiser le refroidissement du dispositif de stockage électrique et notamment d'optimiser un échange thermique entre le flux d'air et l'échangeur de chaleur constitutif du circuit de fluide réfrigérant.

Enfin, il est souhaitable de minimiser un encombrement généré par les échangeurs de chaleur.

La présente invention a pour but de proposer un module d'échange de chaleur comportant au moins deux échangeurs de chaleur qui est agencé notamment pour permettre un échange thermique adapté selon que le véhicule automobile est en mode roulage ou bien en mode charge rapide, le module d'échange de chaleur étant néanmoins le plus compact possible, le plus léger possible et le plus facile et rapide à assembler possible.

WO2015/129348 A1 divulgue un module d'échange de chaleur de l'art antérieur.

Un module de la présente invention est un module d'échange de chaleur comprenant au moins deux échangeurs de chaleur, dont un premier échangeur de chaleur qui est configuré pour permettre un échange thermique entre un premier fluide et un flux d'air et qui s'étend à l'intérieur d'un premier plan d'extension générale et un deuxième échangeur de chaleur qui est configuré pour permettre un échange thermique entre un deuxième fluide et le flux d'air et qui s'étend à l'intérieur d'un deuxième plan d'extension générale. Le premier plan d'extension générale est distinct du deuxième plan d'extension générale. Le module d'échange de chaleur comprend au moins un boîtier délimitant avec le premier échangeur de chaleur un canal de circulation du flux d'air.

Selon la présente invention, le module d'échange de chaleur comprend au moins un organe de distribution d'air mobile entre une première position dans laquelle l'organe de distribution d'air autorise une traversée du premier échangeur de chaleur et du deuxième échangeur de chaleur par le flux d'air et une deuxième position dans laquelle l'organe de distribution d'air interdit la traversée du premier échangeur de chaleur par le flux d'air tout en autorisant la traversée du deuxième échangeur de chaleur par le flux d'air.

Selon l'invention, l'organe de distribution d'air comprend au moins un volet mobile en rotation autour d'un axe de rotation équipant le volet, le module d'échange de chaleur comprenant un organe de manœuvre du volet configuré pour actionner le volet par l'intermédiaire d'un axe de manœuvre du volet, le volet s'étendant entre une première extrémité longitudinale et une deuxième extrémité longitudinale du volet qui sont comprises à l'intérieur d'un plan d'allongement général du volet, l'axe de rotation et/ou l'axe de manœuvre s'inscrivant dans le plan d'allongement général du volet.

Selon l'invention, l'axe de rotation et l'axe de manœuvre sont distincts l'un de l'autre. On notera que le deuxième échangeur de chaleur peut être configuré pour être parcouru par un deuxième fluide distinct ou identique au premier fluide.

Le module d'échange de chaleur comprend l'une quelconque au moins des caractéristiques techniques suivantes, prises seules ou en combinaison :
- selon un exemple ne relevant pas de l'invention revendiquée, l'axe de rotation et l'axe de manœuvre sont confondus,
- la première extrémité longitudinale du volet comporte un profil effilé et la deuxième extrémité longitudinale du volet comporte un profil bombé,
- la première extrémité longitudinale du volet comporte un profil bombé et la deuxième extrémité longitudinale du volet comporte un profil effilé,
- la première extrémité longitudinale du volet comprend l'axe de rotation tandis que la deuxième extrémité longitudinale du volet comprend l'axe de manœuvre,
- la deuxième extrémité longitudinale du volet comprend l'axe de rotation et l'axe de manœuvre dudit volet,
- le module d'échange de chaleur comprend un unique volet dont la première extrémité longitudinale est contigüe au premier échangeur de chaleur dans au moins la deuxième position du volet,
- le module d'échange de chaleur comprend au moins deux volets dont au moins un premier volet dont la première extrémité longitudinale de premier volet est contigüe au premier échangeur de chaleur et au moins un deuxième volet dont la première extrémité longitudinale de deuxième volet est contigüe de la deuxième extrémité du premier volet, dans au moins la deuxième position du premier volet et du deuxième volet.
- la première extrémité du deuxième volet est contigüe de la deuxième extrémité du premier volet dans la première position où ils autorisent une traversée du premier échangeur de chaleur et du deuxième échangeur de chaleur par le flux d'air, ainsi que dans la deuxième position du premier volet et du deuxième volet où ils interdisent la traversée du premier échangeur de chaleur par le flux d'air tout en autorisant la traversée du deuxième échangeur de chaleur par le flux d'air,
- la première extrémité longitudinale d'au moins l'un du premier et/ou du deuxième volet comporte un profil effilé et la deuxième extrémité longitudinale dudit volet comporte un profil bombé,
- la première extrémité longitudinale d'au moins l'un du premier et/ou du deuxième volet comporte un profil bombé et la deuxième extrémité longitudinale dudit volet comporte un profil effilé,
- le premier plan d'extension générale du premier échangeur de chaleur et le deuxième plan d'extension générale du deuxième échangeur de chaleur sont concourants et forment entre eux un premier angle inférieur à 45°,
- le premier angle est inférieur à 15°,
- le premier échangeur de chaleur et le deuxième échangeur de chaleur comprennent chacun un faisceau d'échange de chaleur interposé entre deux joues, une dimension du premier échangeur de chaleur mesurée entre les deux joues étant inférieure à une dimension du deuxième échangeur de chaleur mesurée entre ses deux joues,
- une première joue du premier échangeur de chaleur surplombe une ligne du deuxième échangeur de chaleur, la ligne s'étendant à une première distance correspondant à un tiers, à +/- 10% près, d'une dimension transversale totale du deuxième échangeur de chaleur,
- une deuxième joue du premier échangeur de chaleur est à une deuxième distance non-nulle du deuxième échangeur de chaleur de manière à former une bouche d'admission du flux d'air vers le deuxième échangeur de chaleur, le boîtier comprenant une entrée d'air, l'organe de distribution s'étendant de la bouche d'admission à l'entrée d'air,
- le deuxième échangeur de chaleur comprend au moins deux passes parallèles de circulation du deuxième fluide, la ligne du deuxième échangeur de chaleur correspondant à une séparation entre deux passes du deuxième échangeur de chaleur,
- le premier échangeur de chaleur surplombe au moins deux passes du deuxième échangeur de chaleur.

La présente invention a aussi pour objet un système d'échange de chaleur comportant un groupe moto-ventilateur apte à faire circuler le flux d'air à travers un tel module d'échange de chaleur, le boîtier comprenant au moins une entrée d'air qui s'étend à l'intérieur d'un plan d'entrée formant avec le premier plan d'extension générale du premier échangeur de chaleur un deuxième angle qui est compris entre 45° et 135°,
- le boîtier comprend au moins une première paroi agencée en une rampe de guidage du flux d'air qui surplombe le premier échangeur de chaleur et qui s'étend entre l'entrée d'air et une première joue du deuxième échangeur de chaleur,
- le boîtier comprend une deuxième paroi qui s'étend entre l'entrée d'air et une deuxième joue du deuxième échangeur de chaleur,
- une sortie d'air du boîtier s'inscrit à l'intérieur d'un plan de sortie qui est parallèle, ou sensiblement parallèle, au deuxième plan d'extension générale du deuxième échangeur de chaleur,
- le boîtier comprend au moins une lumière oblongue formant un passage pour un organe de manœuvre du volet,
- la lumière oblongue est formée dans un flanc du boîtier qui jouxte la rampe de guidage.

La présente invention a aussi pour objet une installation de traitement thermique d'au moins un habitacle d'un véhicule automobile et d'un dispositif de stockage d'énergie électrique du véhicule automobile et/ou de moyens de commande d'un moteur électrique propulsant le véhicule automobile, comprenant au moins un tel système d'échange de chaleur, dans lequel le premier échangeur de chaleur est constitutif d'un circuit de refroidissement des moyens de commande du moteur électrique, et dans lequel le deuxième échangeur de chaleur est constitutif d'un circuit de fluide réfrigérant configuré pour modifier une température du dispositif de stockage d'énergie électrique et/ou d'un air pulsé destiné à être admis à l'intérieur de l'habitacle du véhicule automobile.

La présente invention a aussi pour objet un véhicule automobile équipé d'une telle installation de traitement thermique, le véhicule automobile étant pourvu d'au moins un moteur électrique formant un moyen de propulsion du véhicule automobile.

La présente invention a aussi pour objet un procédé de mise en œuvre d'une telle installation de traitement thermique, dans lequel :
- en mode roulage du véhicule automobile, l'organe de distribution d'air est placé en première position pour permettre au flux d'air entrant à l'intérieur du boîtier par l'intermédiaire d'une entrée d'air de traverser le premier échangeur de chaleur configuré en radiateur pour refroidir les moyens de commande et de traverser le deuxième échangeur de chaleur configuré en condenseur pour refroidir le deuxième fluide circulant à l'intérieur du circuit de fluide réfrigérant,
- en mode charge rapide du dispositif de stockage électrique, l'organe de distribution d'air est placé en deuxième position pour interdire une circulation du flux d'air à travers le premier échangeur de chaleur et privilégier une circulation du flux d'air à travers le deuxième échangeur de chaleur configuré en condenseur pour refroidir le deuxième fluide circulant à l'intérieur du circuit de fluide réfrigérant et refroidir le dispositif de stockage d'énergie électrique et/ou l'air pulsé destiné à être admis à l'intérieur de l'habitacle du véhicule automobile.

L'invention sera mieux comprise à la lecture de la description non limitative qui suit, rédigée au regard des dessins annexés, dans lesquels :
[Fig. 1] - la figure 1 représente un module d'échange de chaleur de la présente invention comprenant un volet agencé selon une première variante de réalisation et représenté en une première position.
[Fig. 2] - la figure 2 représente le module d'échange de chaleur illustré sur la figure 1 dont le volet est représenté en une deuxième position.
[Fig. 3] - la figure 3 représente un module d'échange de chaleur ne relevant pas de l'invention revendiquée comprenant un volet agencé selon une deuxième variante de réalisation et représenté en une première position.
[Fig. 4] - la figure 4 représente le module d'échange de chaleur illustré sur la figure 3, ne relevant pas de l'invention revendiquée, dont le volet est représenté en une deuxième position.
[Fig. 5] - la figure 5 représente un module d'échange de chaleur de la présente invention comprenant deux volets agencés selon une troisième variante de réalisation et représentés en une première position.
[Fig. 6] - la figure 6 représente le module d'échange de chaleur illustré sur la figure 5 dont les volets sont représentés en une deuxième position.
[Fig. 7] - la figure 7 représente une installation de traitement thermique qui est apte à modifier une température d'un habitacle d'un véhicule automobile et/ou d'un dispositif de stockage d'énergie électrique du véhicule automobile et/ou de moyens de commande d'un moteur électrique propulsant le véhicule automobile, l'installation comprenant un module d'échange de chaleur représenté sur les figures précédentes.

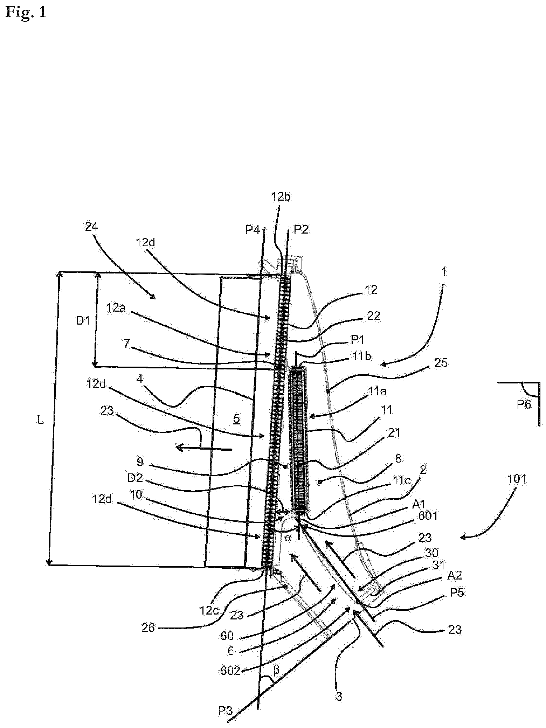

Sur les figures 1 à 6, un véhicule automobile est équipé d'un module d'échange de chaleur 1 comprenant au moins deux échangeurs de chaleur 11, 12 dont un premier échangeur de chaleur 11 et un deuxième échangeur de chaleur 12. Le premier échangeur de chaleur 11 est configuré pour permettre un échange thermique entre un premier fluide 21 qui circule à l'intérieur du premier échangeur de chaleur 11 et un flux d'air 23. Le deuxième échangeur de chaleur 12 est configuré pour permettre un échange thermique entre un deuxième fluide 22, préférentiellement distinct du premier fluide 21, et le flux d'air 23.

Le module d'échange de chaleur 1 comprend un boîtier 2 qui loge le premier échangeur de chaleur 11 et le deuxième échangeur de chaleur 12. Le boîtier 2 comporte une entrée d'air 3 par l'intermédiaire de laquelle le flux d'air 23 est admis à l'intérieur du boîtier 2. Le boîtier 2 comporte une sortie d'air 4 par l'intermédiaire de laquelle le flux d'air 23 est évacué hors du boîtier 2.

Selon la variante illustrée, la sortie d'air 4 est équipée d'un groupe moto-ventilateur 5 qui est apte à faire circuler le flux d'air 23 depuis l'entrée d'air 3 jusque vers la sortie d'air 4. On comprend que le groupe moto-ventilateur 5 est configuré pour aspirer le flux d'air 23 depuis l'entrée d'air 3 vers la sortie d'air 4. Selon une autre variante de réalisation, le groupe moto-ventilateur équipe l'entrée d'air et est configuré pour propulser le flux d'air depuis l'entrée d'air jusque vers la sortie d'air. Le groupe moto-ventilateur 5 et le module d'échange de chaleur 1 forment conjointement un système d'échange de chaleur 24 apte à modifier une température du premier fluide 21 et/ou du deuxième fluide 22.

Dans certaines configurations d'utilisation du module d'échange de chaleur 1, il est souhaitable que le flux d'air 23 subisse un échange thermique avec le premier fluide 21 circulant à l'intérieur du premier échangeur de chaleur 11 et avec le deuxième fluide 22 circulant à l'intérieur du deuxième échangeur de chaleur 12. Dans d'autres configurations d'utilisation du module d'échange de chaleur 1, il est souhaitable que le flux d'air 23 ne subisse pas d'échange thermique avec le premier fluide 21 circulant à l'intérieur du premier échangeur de chaleur 11 pour privilégier une circulation du flux d'air 23 à travers le deuxième échangeur de chaleur 12. Ces dispositions visent notamment à optimiser un échange thermique entre le flux d'air 23 et le deuxième fluide 22 circulant à l'intérieur du deuxième échangeur de chaleur 12, et plus particulièrement à refroidir le plus possible le deuxième fluide 22..

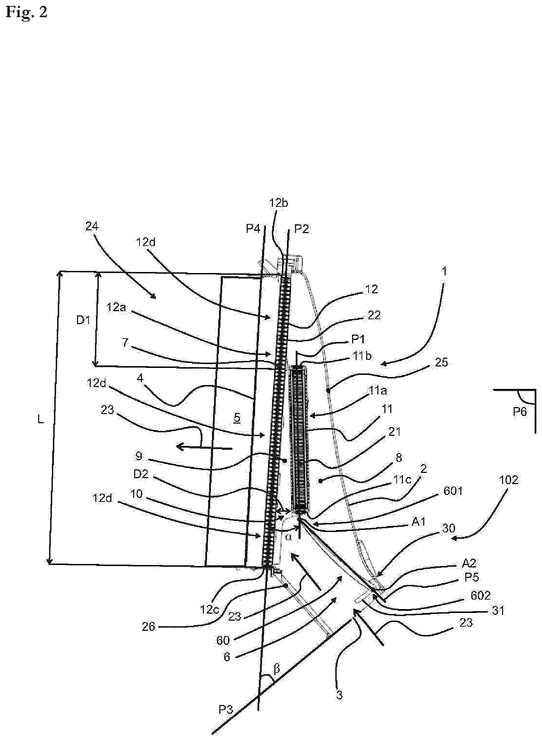

Pour ce faire, le module d'échange de chaleur 1 de la présente invention comprend un organe de distribution d'air 6 qui est mobile entre une première position 101 dans laquelle l'organe de distribution d'air 6 autorise une traversée du premier échangeur de chaleur 11 et du deuxième échangeur de chaleur 12 par le flux d'air 23, telle qu'illustré sur les figures 1, 3 et 5, et une deuxième position 102 dans laquelle l'organe de distribution d'air 6 interdit la traversée du premier échangeur de chaleur 11 par le flux d'air 23 tout en autorisant la traversée du deuxième échangeur de chaleur 12 par le flux d'air 23, telle qu'illustré sur les figures 2, 4 et 6.

On note à ce stade de la description que la circulation du flux d'air 23 à l'intérieur du boîtier 2 est guidé par le boîtier 2 qui enveloppe les deux échangeurs de chaleur 11, 12 et par l'organe de distribution d'air 6 sans nécessité de faire appel à tout autre paroi délimitant des canaux de circulation du flux d'air, et notamment des parois issues de matière du boîtier, ou d'une matière similaire à celle constitutive du boîtier. Autrement dit, la circulation du flux d'air 23 à l'intérieur du boîtier 2 est guidée par le boîtier 2, les échangeurs de chaleur 11, 12 et l'organe de distribution d'air 6 à l'exclusion de tout autre élément, paroi ou canal qui viendraient créer des pertes de charge néfastes à un rendement optimisé du module d'échange de chaleur 1. On comprend que le module d'échange de chaleur 1 de la présente invention comprend un nombre minimum d'éléments qui sont avantageusement disposés les uns par rapport aux autres, de telle sorte que leur nombre et leur masse sont minimisés. On note notamment que le boîtier 2 est agencé en une enveloppe logeant les échangeurs de chaleur 11, 12 et l'organe de distribution d'air 6 sans loger une quelconque autre paroi nécessaire au guidage du flux d'air 23. Il en découle une facilité de réalisation du module d'échange de chaleur 1 et une aisance pour assembler entre eux les éléments constitutifs du module d'échange de chaleur 1. Il en résulte aussi que le module d'échange de chaleur 1 est le plus compact et le plus léger possible.

Pour optimiser les échanges de chaleur réalisés à l'intérieur du module d'échange de chaleur 1 dans une quelconque configuration d'utilisation du module d'échange de chaleur 1 évoquée ci-dessus, le premier échangeur de chaleur 11 qui s'étend à l'intérieur d'un premier plan d'extension générale P1, et le deuxième échangeur de chaleur 12 qui s'étend à l'intérieur d'un deuxième plan d'extension générale P2, sont disposés de telle sorte que le premier plan d'extension générale P1 est distinct du deuxième plan d'extension générale P2. Autrement dit, les échangeurs de chaleur 11, 12 ne sont pas inscrits dans un même plan. On comprend que le plan d'extension générale P1, P2 de chacun des échangeurs de chaleur 11, 12 est le plan dans lequel on peut mesurer les deux plus grandes dimensions de l'échangeur de chaleur 11, 12. Ainsi, dans le plan d'extension générale P1, P2 d'un échangeur de chaleur 11, 12 couramment parallélépipédique, il est possible de mesurer une longueur et une largeur de l'échangeur de chaleur 11, 12 et non une épaisseur de l'échangeur de chaleur 11, 12 qui est une dimension inférieure à la longueur et la largeur de l'échangeur de chaleur 11, 12.

Plus particulièrement, le premier échangeur de chaleur 11 comprend un premier faisceau d'échange de chaleur 11a interposé entre deux premières joues **11b, 11c** et le deuxième échangeur de chaleur 12 comprend un deuxième faisceau d'échange de chaleur 12a interposé entre deux deuxièmes joues 12b, 12c, une dimension du premier échangeur de chaleur 11 mesurée entre les deux premières joues 11b, 11c étant inférieure à une dimension du deuxième échangeur de chaleur 12 mesurée entre ses deux deuxièmes joues 12b, 12c. On comprend qu'une telle dimension du premier échangeur de chaleur 11 et du deuxième échangeur de chaleur 12 est indifféremment formée de sa longueur ou de sa largeur, sa longueur étant définie comme une dimension plus grande que sa largeur. On comprend que selon cette dimension le premier échangeur de chaleur 11 est plus petit que le deuxième échangeur de chaleur 12.

Une première joue 11b du premier échangeur de chaleur 11 surplombe une ligne 7 du deuxième échangeur de chaleur 12. La ligne 7 s'étend parallèlement aux deuxièmes joues 12b, 12c du deuxième échangeur de chaleur 12. La ligne 7 est placée depuis l'une des deuxièmes joues 12b, 12c du deuxième échangeur de chaleur 12 à une première distance D1 correspondant à un tiers, à +/- 10% près, d'une dimension transversale totale L du deuxième échangeur de chaleur 12. On comprend que la dimension transversale totale L du deuxième échangeur de chaleur 12 est la dimension qui s'étend entre les deux deuxièmes joues 12b, 12c du deuxième échangeur de chaleur 12.

Le deuxième échangeur de chaleur 12 comprend par exemple trois passes 12d de circulation du deuxième fluide 22 qui sont parallèles les unes aux autres et qui forment conjointement le faisceau d'échange de chaleur 12a. Dans ce cas, la ligne 7 du deuxième échangeur de chaleur 12 correspond préférentiellement à une séparation entre deux passes 12d du deuxième échangeur de chaleur 12. Le premier échangeur de chaleur 11 surplombe alors deux passes 12d du deuxième échangeur de chaleur 12.

Le boîtier 2 délimite avec le premier échangeur de chaleur 11 un canal de circulation 8 qui est parcouru par le flux d'air 23 lorsque l'organe de distribution d'air 6 est placé en première position 101, tel qu'illustré sur les figures 1, 3 et 5. Lorsque l'organe de distribution d'air 6 est placé en deuxième position 102, tel qu'illustré sur les figures 2, 4 et 6; l'organe de distribution d'air 6 isole le canal de circulation 8 qui ne reçoit pas le flux d'air 23.

Selon la forme de réalisation illustrée sur les figures 1 à 6, le premier plan d'extension générale P1 du premier échangeur de chaleur 11 et le deuxième plan d'extension générale P2 du deuxième échangeur de chaleur 12 sont concourants et forment entre eux un premier angle α qui est inférieur à 45°, et qui est préférentiellement inférieur à 15°. Selon une autre forme de réalisation, le premier plan d'extension générale du premier échangeur de chaleur et le deuxième plan d'extension générale du deuxième échangeur de chaleur sont parallèles.

Par ailleurs, l'entrée d'air 3 s'étend à l'intérieur d'un plan d'entrée P3 qui forme avec le premier plan d'extension générale P1 du premier échangeur de chaleur 11 un deuxième angle β qui est compris entre 45° et 135°. La sortie d'air 4 du boîtier 2 s'inscrit quant à elle à l'intérieur d'un plan de sortie P4 qui est parallèle au deuxième plan d'extension générale P2 du deuxième échangeur de chaleur 12.

Le premier échangeur de chaleur 11 et le deuxième échangeur de chaleur 12 délimitent conjointement une chambre de circulation 9 qui est parcourue par le flux d'air 23 lorsque l'organe de distribution d'air 6 est placé en première position 101, tel qu'illustré sur les figures 1, 3 et 5, et lorsque l'organe de distribution d'air 6 est placé en deuxième position 102, tel qu'illustré sur les figures 2, 4 et 6. La chambre de circulation 9 présente un profil triangulaire dont la ligne 7 forme la pointe du profil triangulaire.

Une deuxième joue 11c du premier échangeur de chaleur 11 est à une deuxième distance D2 non-nulle du deuxième échangeur de chaleur 12 de manière à former une bouche d'admission 10 du flux d'air 23 vers la chambre de circulation 9 et consécutivement vers le deuxième échangeur de chaleur 12. La deuxième distance D2 est mesurée entre la deuxième joue 11c du premier échangeur de chaleur 11 et le deuxième échangeur de chaleur 12 selon une direction orthogonale au deuxième plan d'extension générale P2 du deuxième échangeur de chaleur 12. La bouche d'admission 10 du flux d'air 23 forme une bouche d'entrée unique d'air vers la chambre de circulation 9.

On note aussi que l'organe de distribution d'air 6 s'étend de la bouche d'admission 10 à l'entrée d'air 3, pour optimiser une circulation du flux d'air 23 vers le canal de circulation 8 et la chambre de circulation 9 lorsque l'organe de distribution d'air 6 est en première position 101, ou bien vers uniquement la chambre de circulation 9 lorsque l'organe de distribution d'air 6 est en deuxième position 102.

Le boîtier 2 comprend une première paroi 25 agencée en une rampe de guidage du flux d'air 23 qui surplombe le premier échangeur de chaleur 11 et qui s'étend entre l'entrée d'air 3 et la première joue 12b du deuxième échangeur de chaleur 12. Le boîtier 2 comprend une deuxième paroi 26 qui s'étend entre l'entrée d'air 3 et la deuxième joue 12c du deuxième échangeur de chaleur 12.

Sur les figures 1 à 4, l'organe de distribution d'air 6 comprend un volet unique 60 qui est mobile en rotation autour d'un axe de rotation A1 équipant le volet 60. Autrement dit, le volet 60 comporte l'axe de rotation A1 autour duquel le volet 60 tourne. Pour permettre le mouvement en rotation du volet 60 sur lui-même, le module d'échange de chaleur 1 comprend un organe de manœuvre 30 du volet 60 qui est apte à actionner le volet 60 par l'intermédiaire d'un axe de manœuvre A2 du volet 60, en première position 101 ou en deuxième position 102.

Le volet 60 s'étend entre une première extrémité longitudinale 601 et une deuxième extrémité longitudinale 602 du volet 60 qui définissent un plan d'allongement général P5 du volet 60, la première extrémité longitudinale 601 et la deuxième extrémité longitudinale 602 du volet 60 étant consécutivement comprises à l'intérieur du plan d'allongement général P5 du volet 60.

Sur les figures 1 et 2, la première extrémité longitudinale 601 du volet 60 est pourvue de l'axe de rotation A1 tandis que la deuxième extrémité longitudinale 602 du volet 60 est pourvue de l'axe de manœuvre A2. La première extrémité longitudinale 601 est contigüe au premier échangeur de chaleur 11 dans la première position 101 et la deuxième position 102 du volet 60.

La première extrémité longitudinale 601 du volet 60 comporte un profil effilé et la deuxième extrémité longitudinale 602 du volet 60 comporte un profil bombé, les profils étant pris dans un plan de coupe P6 qui est orthogonal à l'axe de rotation A1 et l'axe de manœuvre A2.

Le boîtier 2 comprend une lumière oblongue 31 formant un passage pour l'organe de manœuvre 30 du volet 60. La lumière oblongue 31 est formée dans un flanc du boîtier 2 qui jouxte la première paroi 25.

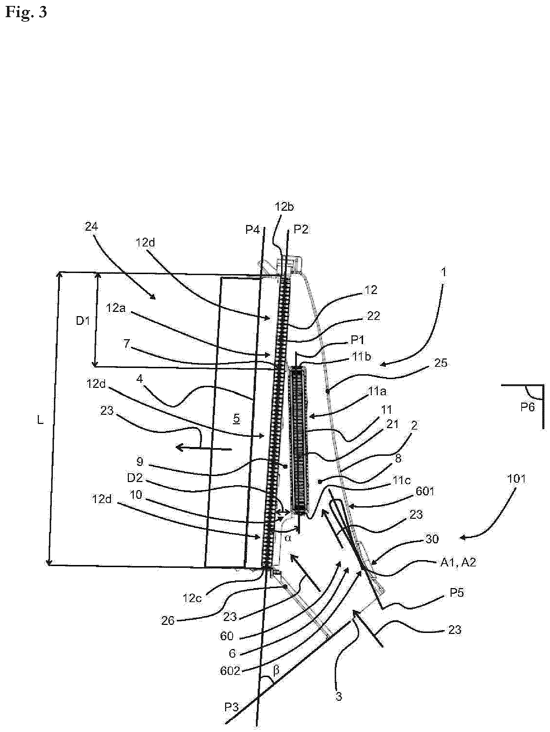

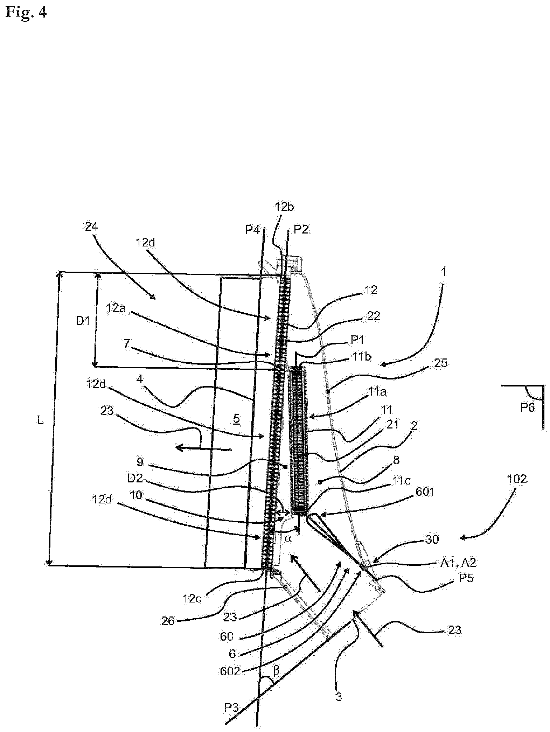

Sur les figures 3 et 4, la deuxième extrémité longitudinale 602 du volet 60 est pourvue de l'axe de rotation A1 et de l'axe de manœuvre A2. La première extrémité longitudinale 601 est contigüe au premier échangeur de chaleur 11 dans la première position 101 du volet 60, illustrée sur la figure 3.

La première extrémité longitudinale 601 du volet 60 comporte un profil bombé et la deuxième extrémité longitudinale 602 du volet 60 comporte un profil effilé, les profils étant pris dans le plan de coupe P6 qui est orthogonal à l'axe de rotation A1 et l'axe de manœuvre A2.

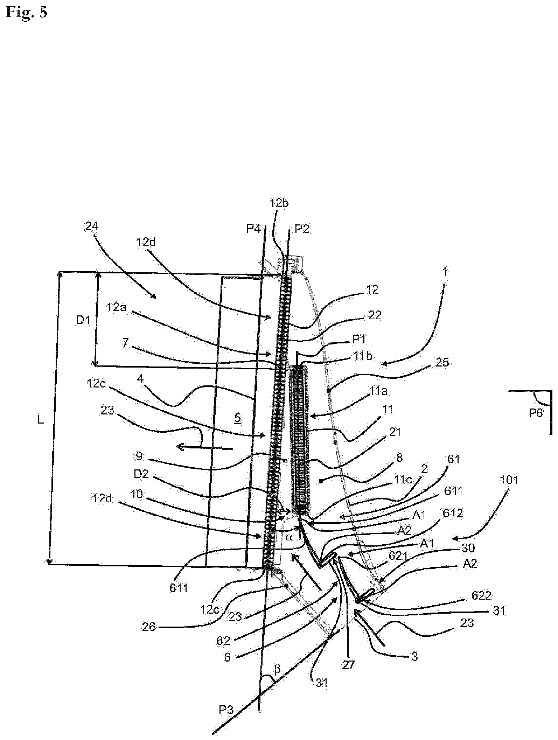

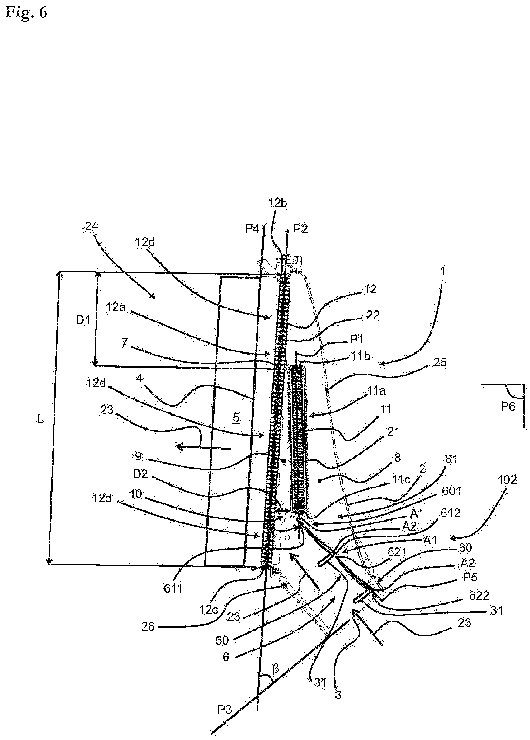

Sur les figures 5 et 6, l'organe de distribution d'air 6 comprend deux volets 61, 62, dont un premier volet 61 et un deuxième volet 62, qui sont chacun mobiles en rotation autour d'un axe de rotation A1 équipant le volet 61, 62. Autrement dit, chaque volet 61, 62 comporte un axe de rotation A1 spécifique autour duquel le volet 61, 62 tourne. Pour permettre le mouvement en rotation du volet 61, 62 sur lui-même, chaque volet 61, 62 est pourvu d'un organe de manœuvre 30 spécifique du volet 61, 62 qui est apte à actionner le volet 61, 62 par l'intermédiaire d'un axe de manœuvre A2 du volet 61, 62. Selon la variante illustrée sur les figures 5 et 6, l'axe de rotation A1 et l'axe de manœuvre A2 de chaque volet 61, 62 sont distincts l'un de l'autre.

Le premier volet 61 comporte une première extrémité longitudinale de premier volet 611 qui est contigüe au premier échangeur de chaleur 11 et une deuxième extrémité longitudinale de premier volet 612 qui est contigüe à une première extrémité longitudinale de deuxième volet 621 que comprend le deuxième volet 62, au moins dans la première position 101 des volets 61, 62. Le deuxième volet 62 comprend une deuxième extrémité longitudinale de deuxième volet 622 qui est contigüe de l'entrée d'air 3.

La première extrémité longitudinale 611, 621 de chaque volet 61, 62 est pourvue de l'axe de rotation A1 du volet 61, 62 tandis que la deuxième extrémité longitudinale 612, 622 de chaque volet 61, 62 est pourvue de l'axe manœuvre A2 du volet 61, 62. L'organe de manœuvre 30 de chaque volet 61, 62 qui est apte à circuler à l'intérieur d'une lumière oblongue 31 respective de chaque organe de manœuvre 30.

Sur la figure 5, qui représente les volets 61,62 dans la première position 101 où ils interdisent une traversée du premier échangeur de chaleur 11 par le flux d'air 23, tout en autorisant une traversée du deuxième échangeur de chaleur 12 par le flux d'air 23, la deuxième extrémité longitudinale du premier volet 612 jouxte la première extrémité du deuxième volet 621.

Sur la figure 6, qui représente les volets 61,62 dans la deuxième position 102 où ils autorisent une traversée du premier échangeur de chaleur 11 et du deuxième échangeur de chaleur 12 par le flux d'air 23, un passage d'air 27 est ménagé entre la deuxième extrémité longitudinale du premier volet 612 et la première extrémité du deuxième volet 621 pour permettre au flux d'air 23 de circuler à l'intérieur du canal de circulation 8. Le passage d'air 27 est ménagé à partir d'une manœuvre des volets 61, 62 actionnés par l'organe de manœuvre 30.

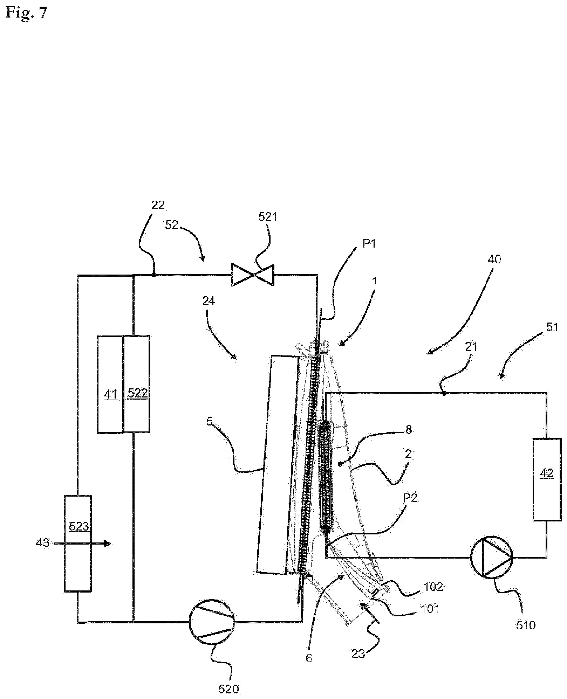

Sur la figure 7, le système d'échange de chaleur 24 qui vient d'être décrit trouve une application particulière et avantageuse dans une installation de traitement thermique 40 qui est apte à modifier une température d'un habitacle d'un véhicule automobile et/ou d'un dispositif de stockage d'énergie électrique 41 du véhicule automobile et/ou de moyens de commande 42 d'un moteur électrique propulsant le véhicule automobile. A cet effet, le premier échangeur de chaleur 11 est constitutif d'un circuit de refroidissement 51 des moyens de commande 42 du moteur électrique, et le deuxième échangeur de chaleur 12 est constitutif d'un circuit de fluide réfrigérant 52 configuré pour modifier la température du dispositif de stockage d'énergie électrique 41 et/ou d'un air pulsé 43 destiné à être admis à l'intérieur de l'habitacle du véhicule automobile.

Le circuit de refroidissement 51 comprend outre le premier échangeur de chaleur 11 au moins une pompe 510 pour faire circuler le premier fluide 21, par exemple constitué d'eau glycolée ou analogue, entre le premier échangeur de chaleur 11 et les moyens de commande 42 du moteur électrique.

Le circuit de fluide réfrigérant 52 comprend au moins un compresseur 520 pour comprimer le deuxième fluide 22, par exemple formé d'un fluide réfrigérant, dioxyde de carbone ou analogue, le deuxième échangeur de chaleur 12 pour céder des calories au flux d'air 23, un organe de détente 521 à l'intérieur duquel le deuxième fluide 22 subit une détente, un premier échangeur thermique 522 qui est agencé pour refroidir le dispositif de stockage d'énergie électrique 41 et un deuxième échangeur thermique 523 qui est agencé pour refroidir l'air pulsé 43.

Une telle installation de traitement thermique 40 est plus particulièrement dédiée à un véhicule automobile pourvu d'au moins un moteur électrique formant un moyen de propulsion du véhicule automobile, ce moteur électrique étant alimenté en énergie électrique par l'intermédiaire du dispositif de stockage d'énergie électrique 41. Le dispositif de stockage d'énergie électrique 41 est notamment apte à être rechargé selon un mode de charge rapide dans lequel le dispositif de stockage d'énergie électrique 41 s'échauffe rapidement.

Dans ce cas, un procédé de mise en œuvre de l'installation de traitement thermique 40, comprend deux modalités distinctes de mise en œuvre selon que le véhicule automobile est en mode roulage ou bien en mode charge rapide du dispositif de stockage d'énergie électrique 41.

En mode roulage du véhicule automobile, l'organe de distribution d'air 6est placé en première position 101 pour permettre au flux d'air 23 entrant à l'intérieur du boîtier 2 par l'intermédiaire de l'entrée d'air 3 de traverser le premier échangeur de chaleur 11 configuré en radiateur pour refroidir les moyens de commande 42 et de traverser le deuxième échangeur de chaleur 12 configuré en condenseur pour refroidir le deuxième fluide 22 circulant à l'intérieur du circuit de fluide réfrigérant 52.

En mode charge rapide du dispositif de stockage électrique 41, l'organe de distribution d'air 6 est placé en deuxième position 102 pour interdire une circulation du flux d'air 23 à travers le premier échangeur de chaleur 11 et privilégier une circulation du flux d'air 23 à travers le deuxième échangeur de chaleur 12 configuré en condenseur pour refroidir le deuxième fluide 22 circulant à l'intérieur du circuit de fluide réfrigérant 52 et refroidir le dispositif de stockage d'énergie électrique 41 et/ou l'air pulsé 43 destiné à être admis à l'intérieur de l'habitacle du véhicule automobile.

## Revendications

1. Module d'échange de chaleur (1) comprenant au moins deux échangeurs de chaleur (11, 12), dont un premier échangeur de chaleur (11) qui est configuré pour permettre un échange thermique entre un premier fluide (21) et un flux d'air (23) et qui s'étend à l'intérieur d'un premier plan d'extension générale (P1) et un deuxième échangeur de chaleur (12) qui est configuré pour permettre un échange thermique entre un deuxième fluide (22) et le flux d'air (23) et qui s'étend à l'intérieur d'un deuxième plan d'extension générale (P2), dans lequel le premier plan d'extension générale (P1) est distinct du deuxième plan d'extension générale (P2), le module d'échange de chaleur (1) comprenant au moins un boîtier (2) délimitant avec le premier échangeur de chaleur (11) un canal de circulation (8) du flux d'air (23), dans lequel le module d'échange de chaleur (1) comprend au moins un organe de distribution d'air (6) mobile entre une première position (101) dans laquelle l'organe de distribution d'air (6) autorise une traversée du premier échangeur de chaleur (11) et du deuxième échangeur de chaleur (12) par le flux d'air (23) et une deuxième position (102) dans laquelle l'organe de distribution d'air (6) interdit la traversée du premier échangeur de chaleur (11) par le flux d'air (23) tout en autorisant la traversée du deuxième échangeur de chaleur (12) par le flux d'air (23) dans lequel l'organe de distribution d'air (6) comprend au moins un volet (60, 61, 62) mobile en rotation autour d'un axe de rotation (A1) équipant le volet (60, 61, 62), le module d'échange de chaleur (1) comprenant un organe de manœuvre (30) du volet (60, 61, 62) configuré pour actionner le volet (60, 61, 62) par l'intermédiaire d'un axe de manœuvre (A2) du volet (60, 61, 62), le volet (60, 61, 62) s'étendant entre une première extrémité longitudinale (601, 611, 621) et une deuxième extrémité longitudinale (602, 612, 622) du volet (60, 61, 62) qui sont comprises à l'intérieur d'un plan d'allongement général (P5) du volet (60, 61, 62), l'axe de rotation (A1) et/ou l'axe de manœuvre (A2) s'inscrivant dans le plan d'allongement général (P5) du volet (60, 61, 62) **caractérisé en ce que** l'axe de rotation (A1) et l'axe de manœuvre (A2) sont distincts l'un de l'autre.

2. Module d'échange de chaleur (1) selon la revendication précédente, dans lequel le premier plan d'extension générale (P1) du premier échangeur de chaleur (11) et le deuxième plan d'extension générale (P2) du deuxième échangeur de chaleur (12) sont concourants et forment entre eux un premier angle (α) inférieur à 45°.

3. Module d'échange de chaleur (1) selon l'une quelconque des revendications précédentes, dans lequel le premier échangeur de chaleur (11) et le deuxième échangeur de chaleur (12) comprennent chacun un faisceau d'échange de chaleur (11a, 12a) interposé entre deux joues (11b, 11c ; 12b, 12c), une dimension du premier échangeur de chaleur (11) mesurée entre les deux joues (11b, 11c) étant inférieure à une dimension du deuxième échangeur de chaleur (12) mesurée entre ses deux joues (12b, 12c).

4. Module d'échange de chaleur (1) selon la revendication 3, dans lequel une première joue (11b) du premier échangeur de chaleur (11) surplombe une ligne (7) du deuxième échangeur de chaleur (12), la ligne (7) s'étendant à une première distance (D1) correspondant à un tiers, à +/- 10% près, d'une dimension transversale totale (L) du deuxième échangeur de chaleur (12).

5. Installation de traitement thermique (40) d'au moins un habitacle d'un véhicule automobile et d'un dispositif de stockage d'énergie électrique (41) du véhicule automobile et/ou de moyens de commande (42) d'un moteur électrique propulsant le véhicule automobile, comprenant au moins un groupe moto-propulseur (5) et un module d'échange de chaleur (1) selon l'une quelconque des revendications précédentes, dans lequel le premier échangeur de chaleur (11) est constitutif d'un circuit de refroidissement (51) des moyens de commande (42) du moteur électrique, et dans lequel le deuxième échangeur de chaleur (12) est constitutif d'un circuit de fluide réfrigérant (52) configuré pour modifier une température du dispositif de stockage d'énergie électrique (41) et/ou d'un air pulsé (43) destiné à être admis à l'intérieur de l'habitacle du véhicule automobile.

6. Véhicule automobile équipé d'une installation de traitement thermique selon la revendication 5, le véhicule automobile étant pourvu d'au moins un moteur électrique formant un moyen de propulsion du véhicule automobile.

7. Procédé de mise en œuvre d'une installation de traitement thermique selon la revendication 5, dans lequel :
- en mode roulage du véhicule automobile, l'organe de distribution d'air (6) est placé en première position (101) pour permettre au flux d'air (23) entrant à l'intérieur du boîtier (2) par l'intermédiaire d'une entrée d'air (3) de traverser le premier échangeur de chaleur (11) configuré en radiateur pour refroidir les moyens de commande (42) et de traverser le deuxième échangeur de chaleur (12) configuré en condenseur pour refroidir le deuxième fluide (22) circulant à l'intérieur du circuit de fluide réfrigérant (52),
- en mode charge rapide du dispositif de stockage électrique (41), l'organe de distribution d'air (6) est placé en deuxième position (102) pour interdire une circulation du flux d'air (23) à travers le premier échangeur de chaleur (11) et privilégier une circulation du flux d'air (23) à travers le deuxième échangeur de chaleur (12) configuré en condenseur pour refroidir le deuxième fluide (22) circulant à l'intérieur du circuit de fluide réfrigérant (52) et refroidir le dispositif de stockage d'énergie électrique (41) et/ou l'air pulsé (43) destiné à être admis à l'intérieur de l'habitacle du véhicule automobile.

## Patentansprüche

1. Wärmeaustauschmodul (1), umfassend mindestens zwei Wärmetauscher (11, 12), von denen ein erster Wärmetauscher (11), der konfiguriert ist, um einen Wärmeaustausch zwischen einem ersten Fluid (21) und einem Luftstrom (23) zu ermöglichen und der sich innerhalb einer ersten allgemeinen Ausdehnungsebene (P1) erstreckt, und ein zweiter Wärmetauscher (12), der konfiguriert ist, um einen Wärmeaustausch zwischen einem zweiten Fluid (22) und dem Luftstrom (23) zu ermöglichen und der sich innerhalb einer zweiten allgemeinen Ausdehnungsebene (P2) erstreckt, wobei die erste allgemeine Ausdehnungsebene (P1) von der zweiten allgemeinen Ausdehnungsebene (P2) verschieden ist, wobei das Wärmeaustauschmodul (1) mindestens ein Gehäuse (2) umfasst, das mit dem ersten Wärmetauscher (11) einen Strömungskanal (8) des Luftstroms (23) begrenzt, wobei das Wärmeaustauschmodul (1) mindestens ein Luftverteilungsorgan (6) umfasst, das zwischen einer ersten Position (101), in der das Luftverteilungsorgan (6) ein Durchströmen des ersten Wärmetauschers (11) und des zweiten Wärmetauschers (12) durch den Luftstrom (23) erlaubt, und einer zweiten Position (102), in der das Luftverteilungsorgan (6) das Durchströmen des ersten Wärmetauschers (11) durch den Luftstrom (23) verhindert, während es das Durchströmen des zweiten Wärmetauschers (12) durch den Luftstrom (23) erlaubt, beweglich ist, wobei das Luftverteilungsorgan (6) mindestens eine Klappe (60, 61, 62) umfasst, die um eine Drehachse (A1) drehbar ist, mit der die Klappe (60, 61, 62) ausgestattet ist, wobei das Wärmeaustauschmodul (1) ein Betätigungsorgan (30) der Klappe (60, 61, 62) umfasst, das konfiguriert ist, um die Klappe (60, 61, 62) über eine Betätigungsachse (A2) der Klappe (60, 61, 62) zu betätigen, wobei sich die Klappe (60, 61, 62) zwischen einem ersten Längsende (601, 611, 621) und einem zweiten Längsende (602, 612, 622) der Klappe (60, 61, 62) erstreckt, die innerhalb einer allgemeinen Verlängerungsebene (P5) der Klappe (60, 61, 62) enthalten sind, wobei die Drehachse (A1) und/oder die Betätigungsachse (A2) in der allgemeinen Verlängerungsebene (P5) der Klappe (60, 61, 62) liegen, **dadurch gekennzeichnet, dass** die Drehachse (A1) und die Betätigungsachse (A2) voneinander verschieden sind.

2. Wärmeaustauschmodul (1) nach dem vorhergehenden Anspruch, wobei die erste allgemeine Ausdehnungsebene (P1) des ersten Wärmetauschers (11) und die zweite allgemeine Ausdehnungsebene (P2) des zweiten Wärmetauschers (12) zusammenlaufen und zwischen ihnen einen ersten Winkel (a) von weniger als 45° bilden.

3. Wärmeaustauschmodul (1) nach einem der vorhergehenden Ansprüche, wobei der erste Wärmetauscher (11) und der zweite Wärmetauscher (12) jeweils ein Wärmeaustauschbündel (11a, 12a) umfassen, das zwischen zwei Wangen (11b, 11c; 12b, 12c) angeordnet ist, wobei eine Abmessung des ersten Wärmetauschers (11), gemessen zwischen den beiden Wangen (11b, 11c), kleiner ist als eine Abmessung des zweiten Wärmetauschers (12), gemessen zwischen seinen beiden Wangen (12b, 12c).

4. Wärmeaustauschmodul (1) nach Anspruch 3, wobei eine erste Wange (11b) des ersten Wärmetauschers (11) eine Linie (7) des zweiten Wärmetauschers (12) überragt, wobei sich die Linie (7) in einem ersten Abstand (D1) erstreckt, der einem Drittel, mit einer Abweichung von +/- 10%, einer gesamten Querabmessung (L) des zweiten Wärmetauschers (12) entspricht.

5. Wärmebehandlungsanlage (40) für mindestens einen Innenraum eines Kraftfahrzeugs und eine elektrische Energiespeichervorrichtung (41) des Kraftfahrzeugs und/oder Steuerungsmittel (42) eines Elektromotors, der das Kraftfahrzeug antreibt, umfassend mindestens einen Antriebsstrang (5) und ein Wärmeaustauschmodul (1) nach einem der vorhergehenden Ansprüche, wobei der erste Wärmetauscher (11) Teil eines Kühlkreislaufs (51) der Steuerungsmittel (42) des Elektromotors ist, und wobei der zweite Wärmetauscher (12) Teil eines Kältemittelkreislaufs (52) ist, der konfiguriert ist, um eine Temperatur der elektrischen Energiespeichervorrichtung (41) und/oder einer Druckluft (43), die in den Innenraum des Kraftfahrzeugs eingelassen werden soll, zu verändern.

6. Kraftfahrzeug, ausgestattet mit einer Wärmebehandlungsanlage nach Anspruch 5, wobei das Kraftfahrzeug mit mindestens einem Elektromotor versehen ist, der ein Antriebsmittel des Kraftfahrzeugs bildet.

7. Verfahren zur Implementierung einer Wärmebehandlungsanlage nach Anspruch 5, wobei:
- im Fahrmodus des Kraftfahrzeugs das Luftverteilungsorgan (6) in die erste Position (101) gebracht wird, um dem Luftstrom (23), der durch einen Lufteinlass (3) in das Gehäuse (2) eintritt, zu ermöglichen, den ersten Wärmetauscher (11), der als Kühler konfiguriert ist, um die Steuerungsmittel (42) zu kühlen, und den zweiten Wärmetauscher (12), der als Kondensator konfiguriert ist, um das zweite Fluid (22), das im Kältemittelkreislauf (52) zirkuliert, zu kühlen, zu durchströmen,
- im Schnellladungsmodus der elektrischen Speichervorrichtung (41) das Luftverteilungsorgan (6) in die zweite Position (102) gebracht wird, um eine Zirkulation des Luftstroms (23) durch den ersten Wärmetauscher (11) zu verhindern und eine Zirkulation des Luftstroms (23) durch den zweiten Wärmetauscher (12), der als Kondensator konfiguriert ist, um das zweite Fluid (22), das im Kältemittelkreislauf (52) zirkuliert, zu kühlen und die elektrische Energiespeichervorrichtung (41) und/oder die Druckluft (43), die in den Innenraum des Kraftfahrzeugs eingelassen werden soll, zu kühlen, zu bevorzugen.

## Claims

1. Heat exchange module (1) comprising at least two heat exchangers (11, 12), including a first heat exchanger (11) which is configured to allow heat exchange between a first fluid (21) and an air flow (23) and which extends within a first general extension plane (P1) and a second heat exchanger (12) which is configured to allow heat exchange between a second fluid (22) and the air flow (23) and which extends within a second general extension plane (P2), wherein the first general extension plane (P1) is distinct from the second general extension plane (P2), the heat exchange module (1) comprising at least one housing (2) delimiting with the first heat exchanger (11) a circulation channel (8) for the air flow (23), wherein the heat exchange module (1) comprises at least one air distribution member (6) movable between a first position (101) in which the air distribution member (6) allows passage of the air flow (23) through the first heat exchanger (11) and the second heat exchanger (12) and a second position (102) in which the air distribution member (6) prevents passage of the air flow (23) through the first heat exchanger (11) while allowing passage of the air flow (23) through the second heat exchanger (12) wherein the air distribution member (6) comprises at least one flap (60, 61, 62) rotatably movable around a rotation axis (A1) equipping the flap (60, 61, 62), the heat exchange module (1) comprising an operating member (30) of the flap (60, 61, 62) configured to actuate the flap (60, 61, 62) via an operating axis (A2) of the flap (60, 61, 62), the flap (60, 61, 62) extending between a first longitudinal end (601, 611, 621) and a second longitudinal end (602, 612, 622) of the flap (60, 61, 62) which are included within a general elongation plane (P5) of the flap (60, 61, 62), the rotation axis (A1) and/or the operating axis (A2) being inscribed in the general elongation plane (P5) of the flap (60, 61, 62) **characterized in that** the rotation axis (A1) and the operating axis (A2) are distinct from each other.

2. Heat exchange module (1) according to the preceding claim, wherein the first general extension plane (P1) of the first heat exchanger (11) and the second general extension plane (P2) of the second heat exchanger (12) are concurrent and form between them a first angle (a) less than 45°.

3. Heat exchange module (1) according to any one of the preceding claims, wherein the first heat exchanger (11) and the second heat exchanger (12) each comprise a heat exchange core (11a, 12a) interposed between two side plates (11b, 11c; 12b, 12c), a dimension of the first heat exchanger (11) measured between the two side plates (11b, 11c) being less than a dimension of the second heat exchanger (12) measured between its two side plates (12b, 12c).

4. Heat exchange module (1) according to claim 3, wherein a first side plate (11b) of the first heat exchanger (11) overhangs a line (7) of the second heat exchanger (12), the line (7) extending at a first distance (D1) corresponding to one third, to within +/- 10%, of a total transverse dimension (L) of the second heat exchanger (12).

5. Thermal treatment installation (40) for at least one compartment of a motor vehicle and an electrical energy storage device (41) of the motor vehicle and/or control means (42) of an electric motor propelling the motor vehicle, comprising at least one powertrain (5) and a heat exchange module (1) according to any one of the preceding claims, wherein the first heat exchanger (11) is constitutive of a cooling circuit (51) of the control means (42) of the electric motor, and wherein the second heat exchanger (12) is constitutive of a refrigerant fluid circuit (52) configured to modify a temperature of the electrical energy storage device (41) and/or of blown air (43) intended to be admitted inside the compartment of the motor vehicle.

6. Motor vehicle equipped with a thermal treatment installation according to claim 5, the motor vehicle being provided with at least one electric motor forming a propulsion means of the motor vehicle.

7. Method for implementing a thermal treatment installation according to claim 5, wherein:
- in driving mode of the motor vehicle, the air distribution member (6) is placed in first position (101) to allow the air flow (23) entering inside the housing (2) via an air inlet (3) to pass through the first heat exchanger (11) configured as a radiator to cool the control means (42) and to pass through the second heat exchanger (12) configured as a condenser to cool the second fluid (22) circulating inside the refrigerant fluid circuit (52),
- in fast charging mode of the electrical storage device (41), the air distribution member (6) is placed in second position (102) to prohibit circulation of the air flow (23) through the first heat exchanger (11) and favor circulation of the air flow (23) through the second heat exchanger (12) configured as a condenser to cool the second fluid (22) circulating inside the refrigerant fluid circuit (52) and cool the electrical energy storage device (41) and/or the blown air (43) intended to be admitted inside the compartment of the motor vehicle.
